# EUROPEAN PATENT SPECIFICATION

(11) **EP 3 689 955 B1**
(45) Date of publication and mention of the grant of the patent: **09.11.2022**
(21) Application number: 19157929.1
(22) Date of filing: 19.02.2019
(51) Int. Cl.: C08K 5/00, C08L 3/02

(54) **IMPROVED STARCH BASED BIODEGRADABLE POLYMERS**
VERBESSERTE STÄRKEBASIERTE BIOLOGISCH ABBAUBARE POLYMERE
POLYMÈRES BIODÉGRADABLES AMÉLIORÉS À BASE D'AMIDON

(30) Priority: 01.02.2019 PT 2019115286
(43) Date of publication of application: 05.08.2020
(73) Proprietor: United Resins - Produção de Resinas S.A., 3090-380 Figueira da Foz (PT)
(72) Inventor: Aldás Carrasco, Miguel Fernando, 170402 Quito (EC); Arrieta, Marina Patricia, 28027 Madrid (ES); Ferri Azor, José Miguel, 03820 Cocentaina-Alicante (ES); García-García, Daniel, 03440 Ibi-Alicante (ES); Samper Madrigal, María Dolores, 03440 Ibi -Alicante (ES); López Martínez, Juan, 03440 Ibi-Alicante (ES); Mendes Ferreira, António Manuel, 3045-096 3045-096 Coimbra (PT)
(74) Representative: Ferreira Pinto, Francisca

(56) References cited:
- WO-A1-2011/054896
- WO-A2-2009/147606
- CN-A- 107 163 299
- FERRI J M ET AL: "The effect of maleinized linseed oil (MLO) on mechanical performance of poly(lactic acid)-thermoplastic starch (PLA-TPS) blends", CARBOHYDRATE POLYMERS, APPLIED SCIENCE PUBLISHERS, LTD. BARKING, GB, vol. 147, 29 March 2016 (2016-03-29), pages 60-68, XP029538201, ISSN: 0144-8617, DOI: 10.1016/J.CARBPOL.2016.03.082
- RIHUI LIN ET AL: "Synthesis of Rosin Acid Starch Catalyzed by Lipase", BIOMED RESEARCH INTERNATIONAL, vol. 2014, 25 May 2014 (2014-05-25), pages 1-8, XP055615623, ISSN: 2314-6133, DOI: 10.1155/2014/647068
- ARRIETA M P ET AL: "Disintegrability under composting conditions of plasticized PLA-PHB bl", POLYMER DEGRADATION AND STABILITY, BARKING, GB, vol. 108, 7 February 2014 (2014-02-07), pages 307-318, XP029056307, ISSN: 0141-3910, DOI: 10.1016/J.POLYMDEGRADSTAB.2014.01.034

## Description

### FIELD OF THE INVENTION

The present invention concerns improved biodegradable polymers, in particular starch-based biopolymers, such as thermoplastic starch (TPS) polymers, formulated with gum rosin derivatives such that the resulting starch based biodegradable composition present improved processability, mechanical, microstructural and thermal properties.

These improved starch based biodegradable compositions are specially suitable for almost any plastics industrial application, such as, packaging industry, food packaging, agricultural mulch films or greenhouse plastics and/or disposable products for hygienic and sanitary uses, etc.

### BACKGROUND PRIOR ART

Plastics are one of the most widely used materials, mainly due to the versatility of their applications that make them suitable in almost any field. The consumption of the "commodities" plastics has been growing during the last decades. The worldwide consumption in 2016 of only thermoplastics, polyurethanes and thermosets was 335 million tonnes and 60 million in Europe.¹ The worldwide concern for the generation of high amounts of plastic waste, added to the environmental impact caused by traditional plastics after their useful life has motivated the research on more environmentally friendly materials.² Not only in those plastics that are biodegradable, but also in those that come from renewable sources. ³⁻⁵ Thus, the "bio-polymers" are gaining interest in several industrial applications. The term "biopolymer" involves two different concepts: bio-based and biodegradable polymers. Bio-based polymers are materials derived from renewable resources such as cereals, corn, potatoes, sugar cane, sugar beets or even vegetable oils.⁶ Meanwhile, biodegradable polymers are materials susceptible to degrade in small molecules including water, methane, carbon dioxide, and biomass, by the action of microorganisms under specific conditions.^{7,8} These materials can come from renewable and/or fossil resources. Thus, the research on polymeric materials that combine both properties, such as, thermoplastic starch (TPS), starch based copolymers and, poly(lactic acid) ( PLA), the family of poly(hydroxyalkanoates) PHA, PHB, as well as PBAT, PBST, among others, has been increasing in recent years.^{3,6,9,10} Among the bio-based polymers currently commercialized, those derived from agro- resources, such as starch and in particular in its thermoplastic form, are the most widespread and economic bio-polymers.¹¹⁻¹³ In fact, the introduction of starch in the plastic sector has been motivated by its low cost due to the fact that it is available in large quantities. However, starch cannot be processed through conventional processing plastic techniques without further modification since its degradation begins at a temperature lower than its melting point.¹⁰ Therefore, its thermoplastic form has gained considerable interest in several industrial sectors in which biodegradability is a key factor, including the packaging industry, disposable products for hygienic and sanitary uses, etc.¹⁴ However, the development of TPS-based materials is still limited due to its fragility, low water resistance and dependence on the mechanical properties on the environmental moisture.^{15,16} In fact, it is widely known that, bioplastic materials may have lower performance than traditional synthetic plastics due to their inherent characteristics.^{6,17-19} This is why TPS has also been blended with other polymers with a view to widening its range of applications, as in the case of bags produced in association with PCL by extrusion displaying low-density polyethylene-like mechanical performance.¹³ Therefore, to obtain real alternatives to traditional synthetic polymers it is essential to improve their overall performance, so that novel formulations based on biopolymers will compete with traditional synthetic ones.¹⁹ The plastic processing industry frequently modified the final properties of the polymers with additives, which are gradually replaced by natural ones, due to their advantages in terms of their lower environmental impact.²⁰⁻²² In this sense, Novamont commercializes blends based on TPS with biologically degradable polyesters under the trade name Mater-Bi^{®}, whilst United Biopolymers, developed modified starch based copolymers called Unik Biopar^{®}.

Some authors have reported several ways to improve the thermal and mechanical properties of TPS-based materials intended for the same industrial purposes as in the present invention, by for example, reinforcing the TPS-based material with natural fibers, such as alfa fibers, Miscanthus fibers or flax cellulose pulp.

US6231970 refers to TPS based formulations comprising a particulate filler and amongst others, cellulose derivatives and/or polysaccharide-based polymers to improve mechanical properties.

US6235816 describes TPS mixtures containing at least one aromatic polyester, polyester copolymers having both aliphatic and aromatic blocks, polyester amides, polyethylene oxide polymers, polyglycols, and polyester urethanes together with additives, such as gelatins, proteins, zeins, polysaccharides, cellulose derivatives, polylactides, polyvinyl alcohol, polyvinyl acetate, polyacrylates, sugar alcohols, shellac, casein, fatty acid derivatives, plant fibers, lecithin, chitosan, polyesterpolyurethanes and polyesteramides.

WO2009147606 describes biodegradable plastic materials such as TPS based materials, further comprising vegetable and natural additives, to model the mechanical, physical and aesthetic properties thereof, such as, for example, rapeseed seeds, soybean seeds, grapefruit seeds, sunflower seeds, alfalfa, clover, wheat chaff, rice chaff, cork.

However, from both technical and environmental points of view, there is still an increasing interest and need in developing improved biodegradable starch based materials which overcome the drawbacks known from state of the art such as, low processability and poor mechanical, microstructural and thermal properties.

The inventors of the present invention have found that certain ester derivatives of gum rosin when used as additives in starch based biodegradable plastic materials or blends are capable of improving the processability, mechanical and thermal properties of such starch based biodegradable materials thus providing an efficient solution to the above detailed state of the art drawbacks.

### SUMMARY OF THE INVENTION

Accordingly in a first aspect, the invention relates to biodegradable starch based composition or blend with improved processability, mechanical, microstructural and thermal properties which is characterized by comprising a starch based material or starch based component and a gum rosin ester derivative having a softening point, in the range of 80 - 120 °C. Further the gum rosin ester derivative is a low/medium molecular weight product, preferably between 800 - 3.000Da, mainly enriched with three and tetra ester functional groups, having low acid number, preferably below 30 mgKOH/g and Colour Gardner below 6.

The present invention is directed to a biodegradable starch based composition or blend, wherein the ester derivative of gum rosin is selected from a group consisting of: pentaerythrol ester, glycerol ester, ethylene glycol ester or mixtures thereof. Furthermore the ester derivative of gum rosin may optionally derived from a maleic modified gum rosin.

In a further preferred aspect the present invention is directed to a biodegradable starch based plastic composition or blend, wherein the starch based material or starch based component is selected from the group consisting of: native starch, thermoplastic starch polymer and/or modified starch based copolymers. The biodegradable starch based composition or blend can optionally comprise other polymers selected from the group comprising polybutylene adipate terephthalate (PBAT), Poly (Butylene succinate-co-terephhtalate) PBST, Polybutylene Succinate (PBS ) , polyhydroxyalkanoate (PHA), polyhydroxybutyrate (PHB), polycaprolactone (PCL), polylactic acid (PLA) and/or mixtures thereof.

In a still further preferred aspect the present invention is directed to a biodegradable starch based plastic composition or blend, comprising gum rosin ester derivatives having a softening point between 80 -100^{a} C. In a preferred embodiment the said gum rosin ester derivatives have a molecular weight of from 800 - 3.000Da. In a still preferred embodiment the said gum rosin ester derivatives have an acid value below 30 mgKOH/g. The biodegradable starch based plastic composition or blend comprises optionally a natural or synthetic polymer other than starch selected from the group consisting of: polybutylene adipate terephthalate (PBAT), Poly (Butylene succinate-co-terephhtalate) PBST, Polybutylene Succinate (PBS ), polyhydroxyalkanoate (PHA), polyhydroxybutyrate (PHB), polycaprolactone (PCL), polylactic acid (PLA) and/or mixtures thereof.

In a further aspect the present invention is directed to a biodegradable starch based composition as referred in the preceding paragraphs comprising additionally admixtures selected from the group consisting of: gliceryne, sorbitol, alkaly refined soya bean oil, and/or other vegetable oils, optionally together with other dispersants, plasticizers, lubricants, etc.

The present invention is directed to the above-mentioned biodegradable starch based composition or blend, wherein the ester derivative of gum rosin is present in the composition in an amount of from 0.1 to 15% by weight relative to the total weight of the composition.

In a further preferred aspect the present invention is directed to a biodegradable starch based plastic composition or blend wherein the content of gum rosin ester derivative is preferably between 5 to 15 wt.%, more preferably, 10 wt.% relative to the total composition.

In a more preferred aspect the present invention is directed to a biodegradable starch based composition or blend wherein the content of starch based component is present in the composition in an amount between 30 to 50 wt.%, the other polymers, copolymers or polyesters are present in an amount of from 40 to 60 wt.%, the gum rosin derivative is present in an amount of from 0,1 to 15 wt.%, the plasticizers and/or dispersants are present in an amount up to 5 wt.% and optionally, other additives are present in an amount below 1 wt.%, relative to the total weight of the biodegradable starch based composition.

In a further embodiment the present invention is also directed to a sheet, film, container and molded article made with the biodegradable starch based plastic material as detailed in preceding paragraphs.

Finally the present invention is also directed to the use of an ester derivative of gum rosin selected from the group consisting of pentaerythritol ester of gum rosin, glycerol ester of gum rosin, ethylene glycol ester of gum rosin and/or mixtures thereof, having a softening point between 80 -120 °C, preferably a molecular weight of from 800 - 3.000Da and preferably an acid value below 30 mgKOH/g for the manufacture of a biodegradable starch based composition or blend with improved processability, mechanical, microstructural and thermal properties.

### FIGURES

Figure 1 represents tensile strength (MPa) over resin content (wt.%) of tested gum rosin ester derivatives formulations.
Figure 2 represents elongation at break (%) over resin content (wt.%) of tested gum rosin ester derivatives formulations.
Figures 3A and 3B represent stress- strain curve (toughness) of tested gum rosin ester derivatives formulations.
Figures 4a and 4b represent DMA analysis: a) storage modulus and b) loss factor curves for neat Unik Biopar^{®} and 15 wt.% of gum rosin ester derivatives formulations.

### DETAILED DESCRIPTION OF THE INVENTION

In the following detailed description, for purposes of explanation, numerous specific details are set forth in order to provide a thorough understanding of the disclosed embodiments.

The present invention encompasses biodegradable starch-based plastic composition and/or blend having improved processability, mechanical, microstructural and thermal properties.

Such polymer blends may be extruded, blown, injected or otherwise formed into articles, sheets and films, etc. for use in a wide variety of industrial uses, including packaging industry, such as wraps, bags and pouches, in particular, food packaging, agricultural mulch films or greenhouse plastics and/or disposable products for hygienic and sanitary uses, etc. The authors of the present invention have found that by incorporating specific ester derivatives of gum rosin into a biodegradable starch based composition or polymer blend these specific ester derivatives of gum rosin act as compatibilizers between the components of the composition and contribute to increase toughness up to more than 250% (determined by the area under the stress- strain curve), Young modulus up to more than 5% and tensile strength up to more than 13% (determined by the tensile properties of materials assessed in an universal test machine) when compared to the same biodegradable starch based polymer composition not incorporating such ester derivatives of gum rosin. These results were obtained through the assays as described in example 2. The tensile properties of the formulations were assessed in a universal test machine Ibertest Elib 30 of SAE Ibertest (Madrid, Spain) at room temperature, according to ISO 527 respectively. The tests were performed with a loading cell of 5 kN and a test speed of 10 mm min -1. At least five specimens from each formulation were tested. The toughness of the materials, the area under the typical stress-strain curve and the increase of toughness with respect to the neat Unik Biopar^{®} were calculated. For each sample, one curve was chosen to be representative of the average behaviour of each formulation. The area was calculated using the OriginPro2015 program.

Further it has also been shown that incorporating such ester derivatives of gum rosin into a biodegradable starch based composition or polymer blend , these ester derivatives of gum rosin also act by conferring greater cohesion to the components of the formulation, improving its processability performance by decreasing the processing temperature up to 45°C (determined in the injection molding temperatures profiled) and increasing the maximum elongation at break by 72% (determined by the tensile properties of materials assessed in an universal test machine), when compared to the same biodegradable starch based polymer composition not incorporating such ester derivatives of gum rosin. The tensile properties of the formulations were assessed in a universal test machine Ibertest Elib 30 of SAE Ibertest (Madrid, Spain) at room temperature, according to ISO 527 respectively. The tests were performed with a loading cell of 5 kN and a test speed of 10 mm min-1. At least five specimens from each formulation were tested. These results were obtained through the assays as described in the example 2.

As will be shown in the experimental part reported in the present application, the inventors of the present application have confirmed that the drop of temperature is related to reduction of softening point of resins and it helps saving energy when processing a biodegradable starch based plastic composition according to the present invention. At an industrial level, this effect is interesting in starch-based materials that have a narrow processing window or when high processing temperatures are not allowed to prevent the materials thermal degradation.

Further, the gum rosin ester derivatives provide greater cohesion to the starch-based blends, thus increasing their mechanical performance due to the interaction of the polar groups of the gum rosin ester derivatives with the aliphatic and aromatic groups present in the starch based blends.

As regards elongation at break, the inventors of the present application have shown that by adding the ester derivatives of gum rosin to the starch-based polymer blend compositions of the present invention, there is a substantial increase of the elongation at break regardless of the type or content of gum rosin ester derivative used. This confirms the plasticizing effect of the gum rosin ester derivatives added to the starch-based materials. These results were obtained through the assays as described in the example 2.

Heat Deflection Temperature (HDT) of the starch based plastic materials of the present invention are shown to be decreased in those formulations containing gum rosin ester derivatives with respect to the same starch based plastic composition with no added gum rosin ester derivatives. These results confirm an improved plasticity of the starch-based polymer blends of the present invention when gum resin ester derivatives are added.

For the purpose of the present invention the terms "biodegradable starch based composition/blend/polymer blend" refers to the product of the present invention which is the resulting product or composition after processing throughout an extrusion process, or other reactive chemical or physical process of a composition comprising a "starch based component or material" together with other copolymers or polyesters and gum rosn derivatives and optionally plasticizers, dispersants and/or other additives.

The biodegradable starch based plastic composition of the present invention comprises from 25 wt.% to about 60 wt.% of starch based component or material with respect to the total weight of the composition. More preferably the biodegradable starch based plastic composition comprises from 30wt.% to about 50 wt.% of starch based component with respect to the total weight of the composition. In a still more preferred embodiment of the present invention, the starch based plastic composition comprises 40 wt.% of starch based component.

For the purpose of the present invention the term "starch based component or material" represents the starch based part of the final biodegradable starch based composition. The starch based component or material has preferably a content of starch of at least 25 wt%, more preferably a content of from 30 to 45 wt% with respect to the total weight of the "starch based component or material". The starch based component may further include water and/or other plasticizers or additives, such as, glycerol, sorbitol, glycols, (triethylene glycol, PEG, etc), maltodextrin, urea, etc.. In a preferred embodiment the starch material or starch component is selected from the group consisting of: native starch, thermoplastic starch polymer and/or modified starch based copolymers, such as esterified starch.

The starch used in producing the present invention's starch based material may derived from natural sources. For example, native starch may be extracted through conventional processes well known to a person skilled in the art from corn, potato, wheat, rice, tapioca, sago and high amylase starch.

A technology to produce thermoplastic starch involves the destructurization of the native starch in specific dynamic-thermal conditions. The process is carried out in a co-rotating twin-screw extruder in the presence of a plasticizer, where due to pressure and high shear rates crystalline starch structure is disrupted and the starch is converted into homogeneous, amorphous material, suitable for thermoplastic processing.

A modified starch based copolymer is a product resulting from a chemical extrusion reaction, without desgasification, involving a compatibilizing agent to crosslink native starch and copolymers or polyesters together with optionally plasticizers and/or dispersants and/or other additives, such as, glycerol, sorbitol, glycols, (triethylene glycol, PEG, etc), maltodextrin, urea, formamids, acetamide, sugar, polyol amino acids, lipids, phosphate sorbates, etc,.

Among the modified starch based copolymers, an esterified starch is preferred. Esterified starch, such as, maleic anhydride esterified starch can be synthesized by a dry method using corn starch as the material and maleic anhydride as the esterifying agent.

Ester derivatives of gum rosin are those prepared from wood rosin, and all types of gum rosin, including tall oil rosin. The gum rosin can have an origin from different sort of pine trees, such as; *Pinus Pinaster, Massoniana; Yunannensis, Mercusic, Elliotti,* Tropical and a few Hybrids. The resin acid composition of gum rosin can vary considerably; however, the main resin acids in ester gum are abietic acids, with smaller contents of dehydroabietic and neoabietic acids; pimaric acids, including isopimaric and sandaracopimaric acids; and palustric acid. Resin acids of gum rosins can react on their carboxylic acid group with salts, by esterification to ethylene glycol, diethylene glycol, glycerol, and pentaerythrol, by reduction to alcohols and aldehydes, and by decarboxylation; and also on their double bonds by isomerization (to abietic, norabietic, palustric, and levopimaric acids), by hydrogenation (dihydro- and tetrahydro-products), by dehydrogenation or disproportionation (dehydroabietic and di- and tetrahydro- products), Diels-Alder adducts (maleic anhydride and fumaric acid), oxidation and polymerization. The carboxylic group of the resin acids in gum rosin is attached to a tertiary carbon which is sterically hindered. In order to esterify this type of hindered carboxyl, higher temperatures and generally more drastic conditions are used than for other carboxylic acids. These steric effects are also responsible for the resistance of the resin acid ester linkage to cleavage by water, acid, and alkali.

The ester derivatives of gum rosin which are useful for the purpose of the present invention present a softening point of from 80 - 120 °C as measured with a Ring&Ball apparatus, preferably according to the standard test method of ASTM E 28-99, where the softening point is defined as the temperature at which a disk of the sample held within a horizontal ring is forced downward a distance of 25.4 mm (1in.) under the weight of a steel ball as the sample is heated at 5°C/min in a water, glycerin, silicone oil, ethylene glycol/water or glycerin/water bath.

The ester derivatives of gum rosin which are useful for the purpose of the present invention present an acid value below 30 mgKOH/g, as determined preferably with the standard test method for determining acid value of organic coating materials of ASTM D 1639-90.

The ester derivatives of gum rosin which are useful for the purpose of the present invention present a color value below 6 as measured with the Gardner Colour scale as specified in ASTM D1544. This test method covers the measurement of the color of transparent liquids by means of comparison with arbitrarily numbered glass standards.

The ester derivatives of gum rosin which are useful for the purpose of the present invention have a molecular weight (Mw) between 800 - 3000 Da as determined by PL-GPC 50, at 40°C, using THF as eluent, and a IR detector.

These ester derivatives of gum rosin which are present in the biodegradable starch based composition of the present invention are obtainable by a chemical process occurred in an atmospheric or pressurized stainless steal reactor, promoting gum rosin isomerization, as well as Diels Alder reaction for further modification, and at very high temperature a polycondensation reaction using polyoys, such as glycoys and pentaerithritol.

In a preferred embodiment these ester derivatives can be selected from the group consisting of: pentaerythritol ester of gum rosin, glycerol ester of gum rosin, ethylene glycol ester of gum rosin and/or mixtures thereof. Furthermore the ester derivatives of gum rosin may optionally derived from a maleic modified gum rosin. In that case, rosin can be reacted with a dibasic acid such as maleic and then esterified with the corresponding pentaerythritol, glycerol or ethylene glycol to form the corresponding gum rosin ester derivative as explained in the preceding paragraph.

Commercial available products which meet the aforementioned technical properties are, for example, Lurefor^{®} 125, 85, 100, 110 and 120 resins as well as Resiester^{®} 810V, 35V, A35, MR, N35, ND35, GR30, NR15 commercialized by LureSA, Spain; Unik Tack^{®} P100, P105, P107, G85, G88, P120, P121, NC, NC80, NC100 as well as Unik Gum^{®} G85 and G88 resins, commercialized by United Resins, Portugal; Dertoline^{®} CG, G2, G2L, G5, SG2, P2, P2L, P2LW, SP2, Dertopoline^{®}CG, CG100, G, G1, P125 Granolite^{®} D27, SG, P, Hydrogral^{®} G, P and G5 commercialized by DRT, (France and USA ); Eastman Ester Gum^{®} 8D and 10D, Foral^{®} 85 and 105E, Foralyn^{®} 110, Permalyn^{®} 5095, Staybelite^{®} Ester 10 E and 5E and Pentayn^{®} HE, 5110 and 6110 commercialized by Eastman (Europe); GA90, GA90A, GA90F, GA90LP, GA90R, GA100, GA100A, GA100F, 100R and Arastar^{®} 700... commercialized by Arakawa (Japan); Polimelt^{®} P88, P98, P102, Tergum^{®} T100, T103, T120, T122, T385; T390, T459 and Tergum^{®} T19 commercialized by Repsol, (Portugal); Jonrez^{®} IM826, IM829, IM830 and IM833 commercialized by Ingevity (USA); Procol^{®} 5G, 7G, 7G-ST, 10G, 10GX, 10PL, 10PLD, 10PLC, 10PLST, 14GS, 95, 101, 103, 104 and Procolite^{®} P1 and PST commercialized by Megara, (GREECE; Sylvalite^{®} RE88, RE100, RE104, RE105XL, RE115, RE118 and Sylvatac^{®} RE85, RE95 RE103, Sylvacote^{®} 4973, 7071 and 7118 commercialized by Arizona, (France, Finland, USA).

As explained in a preceding section, the amount of ester derivative of gum rosin in the biodegradable starch based composition may preferably range from 0.1 to 15 wt.% relative to the total composition, being preferred from 5 to 15wt.%, and most preferred, 10wt.% relative to the total composition.

Other biodegradable copolymers or polyesters that may be present in the biodegradable starch based plastic composition are: polybutylene adipate terephthalate (PBAT), Poly (Butylene succinate-co-terephhtalate) PBST, Polybutylene Succinate (PBS ) polyhydroxyalkanoate (PHA), polyhydroxybutyrate (PHB), polycaprolactone (PCL), polylactic acid (PLA) and/or mixtures thereof.

These other biodegradable polymers are present in the composition in an amount of from 40% to 60.% relative to the total composition. Most preferably these other component are present in the composition in an amount of 45%.

The biodegradable starch based composition may further include plasticizers or dispersants, such as: sorbitol, glycerine, alkaly refined soya bean oil, ARSO etc. Optionally, the biodegradable starch based composition may further include other dispersants and/or lubricants well known to the person skilled in the art.

The total amount of plasticizers and/or dispersant in the composition is up to 5 wt.% of the total weight of the composition.

Optionally, the biodegradable starch based composition may further include other customary additives well known to the person skilled in the art which are present in an amount below 1 wt.%, relative to the total weight of the biodegradable starch based composition.

Preferably, the present invention is directed to a biodegradable starch based composition or blend wherein the content of starch based component is present in the composition in an amount between 30 to 50 wt.%, the copolymers or polyesters are present in an amount of from 40 to 60 wt.%, the gum rosin derivative is present in an amount of from 0,1 to 15 wt.%, the plasticizers and/or dispersants are present in an amount up to 5 wt.% and optionally other additives are present in an amount below 1 wt.%, relative to the total weight of the biodegradable starch based composition.

Advantageously the polymer of the present invention is used for obtaining a sheet, film, container and molded article through techniques well known for a person skilled in the art, such as, melt-blending, film extrusion, film blowing extrusion, injection moulding, profile extrusion, hot pressing, melt pressing, casting, thermoforming,electrospinning, 3D printing.

### EXAMPLES

### Example 1: Preparation of a biodegradable starch based plastic material

For the purpose of preparing a biodegradable starch based plastic material according to the present invention Unik Biopar^{®}based on thermoplastic starch (TPS) and aliphatic aromatic polyesters (PBAT and PCL). As additives, two pine resins (gum rosin) derivatives were used: Unik Tack^{®} P120 (softening point of 120 °C and acid number 11.9), and Unik Tack ^{®} P100 resins (softening point of 90 °C and acid number 15). Materials were supplied by United Resins and United Biopolymers (Figueira da Foz, Portugal).

The resin contents added to the Unik Biopar^{®} matrix were 0, 5, 10 and 15 wt.% and seven Unik Biopar^{®}-resin based formulations were obtained, as shown Table 1. Initially, all materials were dried at 50 °C for 24 hours in an air circulation oven. Subsequently, the Unik Biopar^{®}-resin formulations were premixed in plastic containers. Finally, to process the materials the following procedure was followed: (1) extrusion of the material formulations, (2) milling into pellets and (3) injection moulding to obtain test specimens. The materials were processed in a twin-screw extruder (Dupra S.L, Castalla, Spain), with a temperature profile of: 160 °C, 150 °C, 140 °C, 100 °C (from die to hopper) at 50 rpm. An injection moulding machine (Sprinter-11, Erinca S,L., Barcelona, Spain) was then used to obtain injection moulding test specimens. The test specimens were standard rectangular specimens (80 × 10 × 4 mm) and standard tensile specimens "1BA" (length ≥ 75 mm, with 10 mm and thickness ≥ 2 mm) according to UNE-EN ISO 527.

**Table 1: Unik Biopar^{®}-resin formulations and their injection moulding temperature profiles**

| Formulation labelling | Resin content in each formulation (wt.%) | Injection moulding temperature profiles (from die to hopper) (°C) |
|---|---|---|
| Unik Biopar^{®} | 0 | 165, 160, 160 |
| | | |
| Unik Biopar^{®}-5% Unik Tack ^{®} P120 | 5 | 165, 160, 160 |
| | | |
| Unik Biopar^{®}-10% Unik Tack ^{®} P120 | 10 | 150, 150, 145 |
| | | |
| Unik Biopar^{®}-15% Unik Tack ^{®} P120 | 15 | 145, 140, 135 |
| | | |
| Unik Biopar^{®}-5% Unik Tack ^{®} P100 | 5 | 150, 145, 140 |
| | | |
| Unik Biopar^{®}-10% Unik Tack ^{®} P100 | 10 | 150, 145, 140 |
| | | |
| Unik Biopar^{®}-15% Unik Tack ^{®} P100 | 15 | 120, 115, 105 |

From the above results, it could be confirmed that processing temperatures in Unik Tack ^{®} P120 and Unik Tack ^{®} P100 formulations are reduced when compared with a Unik Biopar^{®} formulation containing no ester derivative of gum rosin. The drop of temperature is related to reduction of softening point of resins and it helps saving energy when processing a biodegradable starch based plastic material according to the present invention. At an industrial level, this effect is interesting in starch based materials that have a narrow processing window or when high processing temperatures are not allowed to prevent the materials thermal degradation.

### Example 2: Testing of mechanical characterization of a biodegradable starch based plastic material according to the present invention

The tensile and flexural properties of the test specimens obtained in Example 1 were assessed in a universal test machine Ibertest Elib 30 of SAE Ibertest (Madrid, Spain) at room temperature, according to ISO 527 and ISO 178 respectively. The tests were performed with a loading cell of 5 kN and a test speed of 10 mm min⁻¹. Several specimens from each formulation for both, tensile strength as well as for flexural measurements, were tested. In addition, to analyse the toughness of the materials, the area under the typical stress-strain curve and the increase of toughness with respect to the neat Unik Biopar^{®} were calculated. For each sample, one curve was chosen to be representative of the average behaviour of each formulation. The area was calculated using the OriginPro2015 program.

The resistance to the Charpy Impact by drop of pendulum was measured in a Metrotec S.A. machine (San Sebastian, Spain), using a 1 J pendulum and notched specimens under the ISO 179. The geometry of the notch was type A, with a background radius of 0.25 ± 0.05 mm, the remaining width of 8.0 ± 0.2 and the notch angle was 45° ± 1°. At least five specimens were tested, and the mean was reported.

Shore D hardness of samples with 4 mm thickness was measured on a durometer Model 673-D from Instrument J.Bot S.A. (Barcelona, Spain), under the ISO 868 The mean of at least 20 measurements was reported as the hardness values.

Previous to be mechanically tested, all samples were conditioned 24 h at 25±1 °C and 50±5% HR.

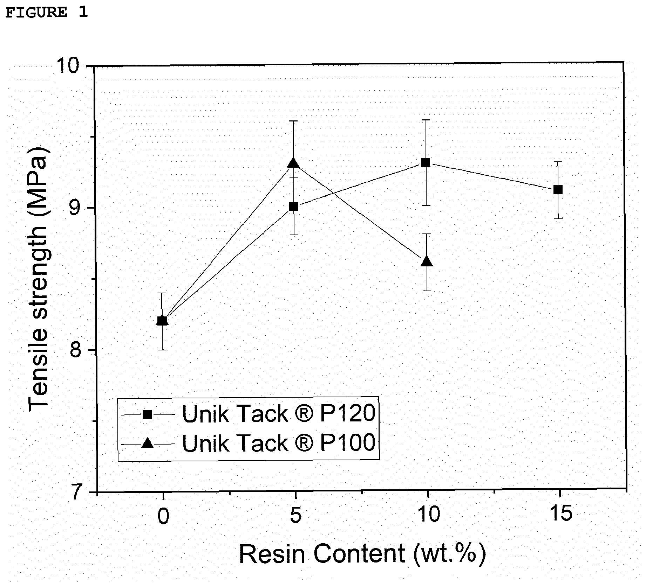

As regards tensile strength, results show a slightly increase of 10% in Unik Biopar^{®} - 5% Unik Tack ^{®} P120, around 13% in Unik Biopar^{®} - 10% Unik Tack ^{®} P120, 14% in Unik Biopar^{®} - 15% Unik Tack ^{®} P120, 13% in Unik Biopar^{®} - 5% Unik Tack ^{®} P100 and increase 5% in Unik Biopar^{®} - 10% Unik Tack ^{®} P100, compared to neat Unik Biopar^{®}.See Figure 1.

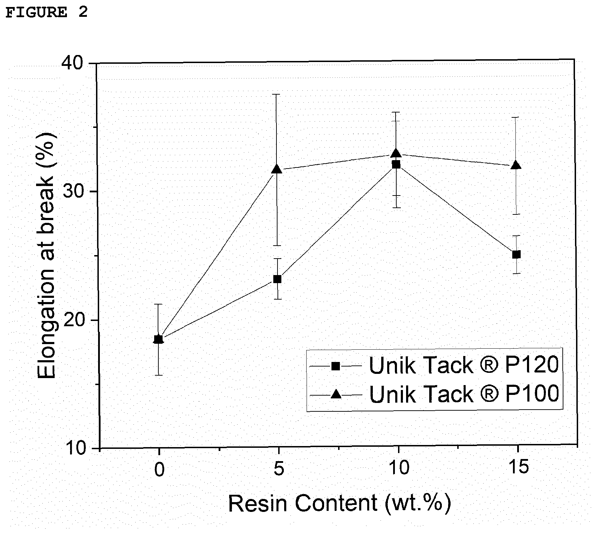

As regards elongation at break, results show a substantial increase regardless of the type or content of gum rosin ester derivatives. This confirms the plasticizing effect of the gum rosin ester derivatives added to the starch based materials. See Figure 2.

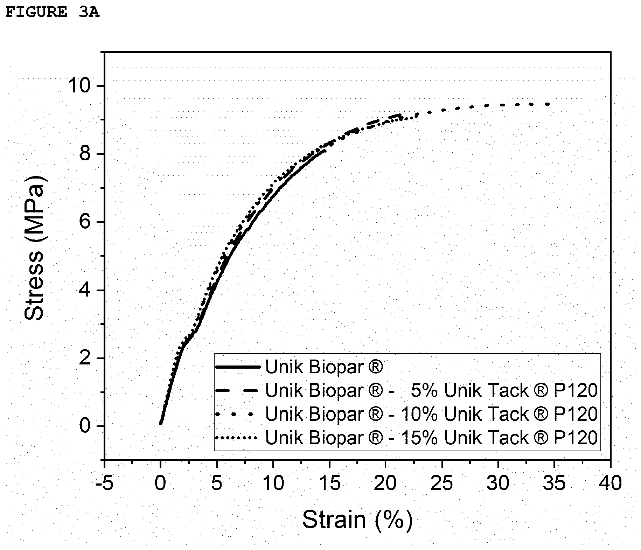

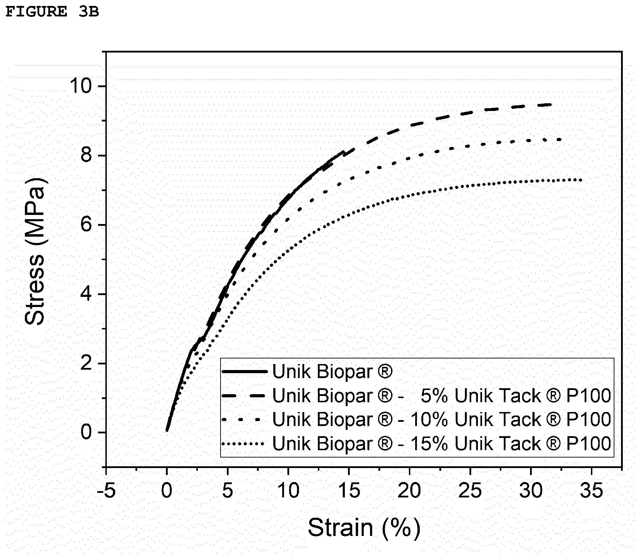

As regards toughness of materials (T) (area under the stress-strain curve), results show a considerable increase compared to neat Unik Biopar^{®}. See Table 2 and Figures 3A and 3B. As a consequence thereof, the gum rosin ester derivatives provide greater cohesion to the starch based blends, thus increasing their mechanical performance due to the interaction of the polar groups of the gum rosin ester derivatives with the aliphatic and aromatic groups present in the starch based blends.

A deeper analysis of the stress-strain curves of Figure 3A and 3B shows that with a 10 wt.% of gum rosin ester derivative the gain of beneficial properties is much greater in terms of earning rate of elongation without losing Young's modulus.

**Table 2. Area of stress-strain curve (toughness) and its comparison with neat Unik Biopar^{®} toughness.**

| Formulation | Toughness *T* (kJ.m⁻³) | Increase of toughness (%) compared to Unik Biopar^{®} |
|---|---|---|
| Unik Biopar^{®} | 745 | - |
| Unik Biopar^{®} - 5% Unik Tack ^{®} P120 | 1388 | 86 |
| Unik Biopar^{®} - 10% Unik Tack ^{®} P120 | 2657 | 257 |
| Unik Biopar^{®} - 15% Unik Tack ^{®} P120 | 1514 | 103 |
| Unik Biopar^{®} - 5% Unik Tack ^{®} P100 | 2287 | 207 |
| Unik Biopar^{®} - 10% Unik Tack ^{®} P100 | 2141 | 187 |
| Unik Biopar^{®} - 15% Unik Tack ^{®} P100 | 1950 | 162 |

### Example 3: Testing on Impact absorption features of the materials according to the present invention

Another property of the materials that gives an idea of the variation of the ductile properties is the impact absorption per unit area. For this purpose, the resistance to the Charpy Impact by drop of pendulum was measured in a Metrotec S.A. machine (San Sebastian, Spain), using a 1 J pendulum and notched specimens under the ISO 179. The geometry of the notch was type A, with a background radius of 0.25 ± 0.05 mm, the remaining width of 8.0 ± 0.2 and the notch angle was 45° ± 1°. Five specimens of each material were tested.

Results as shown in Table 3, where there is a clear trend: formulations added with Unik Tack ^{®} P120 and Unik Tack ^{®} P100experienced a considerable gain of energy absorbed at impact, although its saturation point is at low contents (5 wt.%). This interaction confers high cohesion to the formulated material but low solubility of the resin derivative in the Unik Biopar^{®} matrix

**Table 3. Variation of Charpy's impact energy**

| | Charpy's impact energy (kJ/m²) | |
|---|---|---|
| Unik Biopar^{®} | 3,9±0.4 | |
| Rosin content (wt.%) | Unik Tack ^{®} P120 | Unik Tack ^{®} P100 |
| 5 | 7,8 ± 0.4 | 8.0 ± 0.8 |
| 10 | 6,9 ± 0.4 | 6.8 ± 0.3 |
| 15 | 5,2 ± 0.4 | 5.1 ± 0.3 |

### Example 4: Testing of the Heat Deflection Temperature of the materials according to the present invention

The test specimens of Example 1 were used for this purpose. The Heat Deflection Temperature (HDT) was determined using a VICAT/HDT station DEFLEX 687-A2, Metrotec SA (San Sebastián, Spain) according to ISO 75 (method A) applying a force of 1.8 MPa with a heating rate of 120 °C h-1.

The results obtained were as follows:

**Table 4. Heat deflection temperatures - HDT**

| | Heat deflection temperature HDT (°C) | |
|---|---|---|
| Unik Biopar^{®} | 35.6 | |
| Rosin content (wt.%) | Unik Tack ^{®} P120 | Unik Tack ^{®} P100 |
| 5 | 33.8 | 34.5 |
| 10 | 31.3 | 25.6 |
| 15 | 34 | < 25 |

As shown in Table 4, Heat Deflection Temperature (HDT) of the starch based plastic materials of the present invention are shown to be decreased in those formulations containing gum rosin ester derivatives with respect to exemplary Unik Biopar^{®} neat formulation containing no additive according to the present invention. These results confirm an improved plasticity of the materials of the present inventive.

### Example 5: Testing of dynamic-mechanical properties of a biodegradable starch based plastic material according to the present invention

Dynamic mechanical thermal analysis (DMTA) in torsion mode was done on rectangular samples sizing 40 × 10 × 4 mm obtained by injection moulding in a Sprinter-11, Erinca S,L., (Barcelona, Spain) machine using the injection moulding temperature profiles described in Table 1 from Example 1 test specimens, which were placed in an oscillatory rheometer AR G2 from TA Instruments (New Castle, USA) equipped with a special clamp system for solid samples. The temperature of the test was from -50 °C to 110 °C at a heating rate of 2 °C min-1 at a frequency of 1 Hz and 0.1% of maximum deformation.

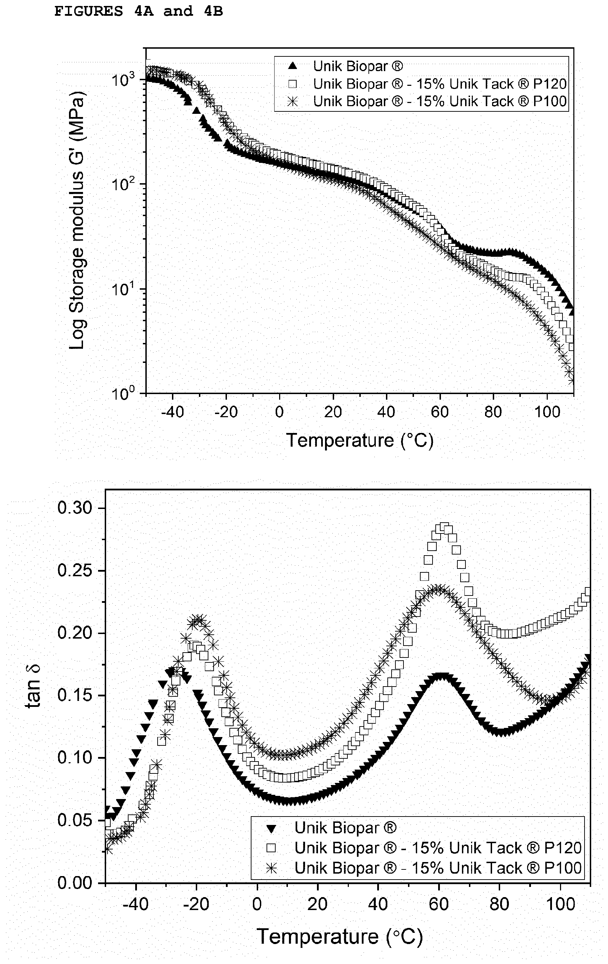

The results of this assay show the effect of pine resin derivatives on the dynamic-mechanical properties of Unik Biopar^{®}.Figure 4a and 4b presents the evolution of storage modulus (G') and the gap between the loss modulus (G") and G', represented by the tangent of the gap (tan δ), plotted against the temperature. In the curve corresponding to the neat Unik Biopar^{®}, two important losses of G' are observed The first one corresponds to the combination of the glass transition of the PBAT and the one of the plasticized starch portion of the Unik Biopar^{®} (TgPBAT and Tgplasticized starch) having associated a peak in tan δ at -28 °C. The second major loss of G' is associated with a peak of tan δ at 60 °C, corresponding to the PCL and additives portion which represents the 10% of the Unik Biopar^{®} polymeric matrix. Thus, in these dynamic mechanical analyses it was observed a peak around 60 °C that coincides with the melting temperature of the PCL. Below the first Tg (TgPBAT and Tgplasticized starch), Unik Biopar^{®} formulations with 15 wt.% of Unik Tack ^{®} P120 and Unik Tack ^{®} P100have a higher G' value than the neat Unik Biopar^{®}.In addition, above this Tg, the formulations containing 15 wt.% of Unik Tack^{®} P120 and Unik Tack^{®} P100 provide higher G' values, increasing the values of the elastic component of polymeric matrix. This is due to the chemical interaction between resin derivatives and Unik Biopar^{®} components. Moreover, this behaviour contributes to a greater cohesion between the components of the Unik Biopar^{®}, already observed in other properties. This interaction is believed to be due to the molecules of both chemically modified resins which act as compatibilizer agent, hindering molecular movement of the polymeric chains.

Analysing the effect of tan δ peaks of Unik Biopar^{®} added with pine resin derivatives it is possible to corroborate the effect of the Unik Tack P120^{®} and Unik Tack P100^{®} resins on the matrix. Both resins act as cohesive agents, probably as a consequence of chemical interactions between the functional groups of the polymer components and the functional groups of the modified resin derivatives. In fact, the peak of TgPBAT-Tgplasticized starch (between -20 and -25 °C) was well defined and separated from that corresponding to the melting of PCL (around 60 °C). Finally, these results are in good agreement with the easier processability of the Unik Biopar^{®}-resin based formulations.

### References:

1. Plastics Europe. 2017.
2. Arrieta, M. P.; Peponi, L.; López, D.; Fernandez-Garcia, M., Industrial Crops and Products 111, 317 2018.
3. Akrami, M.; Ghasemi, I.; Azizi, H.; Karrabi, M.; Seyedabadi, M., Carbohydrate polymers 144, 254 2016.
4. Arrieta, M. P.; Samper, M. D.; Aldas, M.; López, J., Materials 10, 1008 2017.
5. Borchani, K. E.; Carrot, C.; Jaziri, M., Composites Part A: Applied Science and Manufacturing 78, 371 2015.
6. Ferri, J. M.; Garcia-Garcia, D.; Sanchez-Nacher, L.; Fenollar, O.; Balart, R., Carbohydrate polymers 147, 60 2016.
7. Arrieta, M. P.; López, J.; Rayón, E.; Jiménez, A., Polymer Degradation and Stability 108, 307 2014.
8. Kale, G.; Auras, R.; Singh, S. P., Journal of Polymers and the Environment 14, 317 2006.
9. Arrieta, M. P.; López, J.; López, D.; Kenny, J. M.; Peponi, L., Polymer Degradation and Stability 132, 145 2016.
10. Fabra, M. J.; López-Rubio, A.; Cabedo, L.; Lagaron, J. M., Journal of Colloid and Interface Science 483, 84 2016.
11. Sessini, V.; Arrieta, M. P.; Kenny, J. M.; Peponi, L., Polymer Degradation and Stability 132, 157 2016.
12. Ferri, J. M.; Garcia-Garcia, D.; Carbonell-Verdu, A.; Fenollar, O.; Balart, R., Journal of Applied Polymer Science 1352018.
13. Trovatti, E.; Carvalho, A. J. F.; Gandini, A., Polymer International 64, 605 2015.
14. Samper-Madrigal, M.; Fenollar, O.; Dominici, F.; Balart, R.; Kenny, J., Journal of materials science 50, 863 2015.
15. Azevedo, V. M.; Borges, S. V.; Marconcini, J. M.; Yoshida, M. I.; Neto, A. R. S.; Pereira, T. C.; Pereira, C. F. G., Carbohydrate polymers 157, 971 2017.
16. Sessini, V.; Raquez, J. M.; Lourdin, D.; Maigret, J. E.; Kenny, J. M.; Dubois, P.; Peponi, L., Macromolecular Chemistry and Physics 2182017.
17. Lendvai, L.; Apostolov, A.; Karger-Kocsis, J., Carbohydrate polymers2017.
18. Correa, A. C.; Carmona, V. B.; Simão, J. A.; Mattoso, L. H. C.; Marconcini, J. M., Carbohydrate polymers 167, 177 2017.
19. Mikus, P.-Y.; Alix, S.; Soulestin, J.; Lacrampe, M.; Krawczak, P.; Coqueret, X.; Dole, P., Carbohydrate polymers 114, 450 2014.
20. Arrieta, M. P.; Samper, M. D.; Jiménez-López, M.; Aldas, M.; López, J., Industrial Crops and Products 99, 196 2017.
21. Narayanan, M.; Loganathan, S.; Valapa, R. B.; Thomas, S.; Varghese, T., International Journal of Biological Macromolecules 99, 37 2017.
22. Wilbon, P. A.; Chu, F.; Tang, C., Macromolecular rapid communications 34, 8 2013.

## Claims

1. A biodegradable starch based composition comprising a starch based material and an ester derivative of gum rosin, **characterized in that** the ester derivative of gum rosin is selected from the group consisting of: pentaerythritol ester of gum rosin, glycerol ester of gum rosin, ethylene glycol ester of gum rosin and/or mixtures thereof, said ester derivative of gum rosin presenting a softening point of from 80 - 120 °C, an acid value below 30 mgKOH/g and a molecular weight of from 800Da - 3000Da, and being present in the composition in amounts from 0,1 to 15 wt.% relative to the total composition.

2. A biodegradable starch based composition according to claim 1, **characterized in that** the starch based material is selected from the group consisting of: native starch, thermoplastic starch and/or a modified starch based copolymer.

3. A biodegradable starch based composition according to any of claims 1 or 2, **characterized in that** it comprises additionally a natural or synthetic polymer other than starch selected from the group consisting of: polybutylene adipate terephthalate (PBAT), Poly (Butylene succinate-co-terephhtalate) PBST, Polybutylene Succinate (PBS ), polyhydroxyalkanoate (PHA), polyhydroxybutyrate (PHB), polycaprolactone (PCL), polylactic acid (PLA) and/or mixtures thereof.

4. A biodegradable starch based composition according to any of claims 1 to 3, **characterized in that** it comprises additionally admixtures selected from the group consisting of: sorbitol, glycerine, alkaly refined soya bean oil, dispersants, plasticizers and/or lubricants.

5. A biodegradable starch based composition according to claim 1 to 4, **characterized in that** the content of gum rosin ester derivative is of 10% by weight relative to the total composition.

6. A biodegradable starch based composition according to any of claims 1 to 5, **characterized in that** the content of starch based component is present in the composition in an amount between 30 to 50 wt.%, the copolymers or polyesters are present in an amount of from 40 to 60 wt.%, the gum rosin derivative is present in an amount of from 0,1 to 15 wt.%, the plasticizers and/or dispersants are present in an amount up to 5 wt.% and other additives are present in an amount below 1 wt.%, relative to the total weight of the biodegradable starch based composition.

7. Sheet, film, containers and molded articles made with the biodegradable starch based composition of any of the preceding claims.

8. Use of an ester derivative of gum rosin having a softening point of from 80 - 120 °C, an acid value below 30 mgKOH/g and a molecular weight of from 800Da - 3000Da for the manufacture of a biodegradable starch based plastic composition or blend with improved processability, mechanical, microstructural and thermal properties, wherein the ester derivative of gum rosin is selected from the group consisting of: pentaerythritol ester of gum rosin, glycerol ester of gum rosin, ethylene glycol ester of gum rosin and/or mixtures thereof in amounts from 0,1 to 15 wt.% relative to the total composition.

## Patentansprüche

1. Eine Zusammensetzung auf biologisch abbaubarer Stärkebasis umfassend ein Stoff auf Stärkebasis und ein Esterderivat aus Kolophonium **dadurch gekennzeichnet, dass** das Kolophonium-Esterderivat erwählt wird aus der Gruppe bestehend aus: Kolophonium-Pentaerythritol-Ester, Kolophonium-Glyzerinester, Kolophonium-Ethylenglycolester und/ oder Mischungen davon, wobei genanntes Kolophonium-Esterderivat einen Schmelzpunkt von 80 bis 120°C, einen Säurewert unterhalb 30 mgKOH/ g und ein Molekülgewicht von 800DA bis 3000DA aufweist, und ist in der Zusammensetzung in Mengen von 0,1 bis 15 %Gew bzgl. der Gesamtzusammensetzung.

2. Eine Zusammensetzung auf biologisch abbbaurer Stärkebasis gemäß Anspruch 1 **dadurch gekennzeichnet, dass** der Stoff auf biologisch abbaubarer Stärke erwählt wird aus der Gruppe bestehend aus: natürlicher Stärke, thermoplastischer Stärke und/ oder einer veränderten Copolymerstärke.

3. Eine Zusammensetzung auf biologisch abbbaurer Stärkebasis gemäß einer der Ansprüche 1 oder 2 **dadurch gekennzeichnet, dass** sie zusätzlich ein natürliches oder Kunststoffpolymer umfasst anders als Stärke erwählt aus der Gruppe bestehend aus: Polybutylenadipat-terephthalat (PBAT), Poly (Butylensuccinat-coterephthalat) PBST, Polybutylenesuccinat (PBS), Polyhydroxyalkanoate (PHA), Polyhydroxybutyrat (PHB), Polycaprolacton (PCL), Polymilchsäure (PLA) und/ oder Mischungen davon.

4. Eine Zusammensetzung auf biologisch abbbaurer Stärkebasis gemäß einer der Ansprüche 1 bis 3 **dadurch gekennzeichnet, dass** sie zusätzlich Beimischungen umfasst erwählt aus der Gruppe bestehend aus: Sorbit, Glycerin, alkalisch raffiniertem Sojaöl, Dispergatoren, Weichmacher und/ oder Schmiermittel.

5. Eine Zusammensetzung auf biologisch abbbaurer Stärkebasis gemäß Anspruch 1 bis 4 **dadurch gekennzeichnet, dass** der Inhalt des Kolophonium-Esterderivates hat ein Gewicht von 10% bzgl. der Gesamtzusammensetzung.

6. Eine Zusammensetzung auf biologisch abbbaurer Stärkebasis gemäß Anspruch 1 bis 5 **dadurch gekennzeichnet, dass** der Inhalt der Stärkekomponente in der Zusammensetzung in einer Menge zwischen 30 bis 50 %Gew, die Copolymere oder Polyesters in einer Menge von 40 bis 60 %Gew , das Kolophoniumderivat in einer Menge von 0,1 bis 15 %Gew, die Weichmacher und/ oder Dispergatoren in einer Menge bis zu 5 %Gew und andere Additive in einer Menge unterhalb 1 %Gew bzgl. des Gesamtgewichtes der Zusammensetzung auf biologisch abbaubarer Stärkebasis aufweisen.

7. Folie, Film, Behälter und geformte Gegenstände hergestellt mit der Zusammensetzung auf biologisch abbbaurer Stärkebasis nach einem der vorhergehenden Ansprüche.

8. Verwendung eines Kolophonium-Esterderivates umfassend einen Schmelzpunkt von 80 bis 120 °C, einen Säurewert unterhalb 30 mgKOH/ g und ein Molekülgewicht von 800DA bis 3000DA zur Herstellung einer Zusammensetzung aus Kunststoff auf biologisch abbaubaren Stärkebasis oder Mischung mit verbesserter Verarbeitbarkeit, mechanischen, mikrostrukturellen und thermischen Eigenschaften, wobei das Kolophonium-Esterderivat aus der Gruppe erwählt wird bestehend aus: Kolophonium-Pentaerythritol-Ester, Kolophonium-Glyzerinester, Kolophonium-Ethylenglycolester und/ oder Mischungen davon in Mengen von 0,1 bis 1,5 %Gew bzgl. der Gesamtzusammensetzung.

## Revendications

1. Composition biodégradable à base d'amidon comprenant un matériau à base d'amidon et un dérivé ester de colophane, **caractérisée par le fait que** le dérivé ester de colophane est sélectionné à partir d'un groupe qui consiste en : ester pentaérythritol de colophane, ester glycérol de colophane, ester éthylène-glycol de colophane et/ou des mélanges de ceux-ci, le dit dérivé d'ester de colophane présentant un point de ramollissement de 80 - 120° C, un indice d'acide en dessous de 30 mgKOH/g et un poids moléculaire de 800Da - 3000Da, et étant présent dans la composition dans des quantités comprises entre 0,1 et 15 % en masse par rapport à la composition totale.

2. Composition à base d'amidon biodégradable selon la revendication 1, **caractérisée par le fait que** le matériau à base d'amidon est sélectionné à partir du groupe qui consiste en : amidon natif, amidon thermoplastique et/ou un copolymère à base d'amidon modifié.

3. Composition à base d'amidon biodégradable selon une quelconque revendication entre 1 ou 2, **caractérisée par le fait qu'**elle comprend en outre un polymère naturel ou synthétique autre que l'amidon sélectionné depuis un groupe qui consiste en : téréphtalate adipate polybutylène(PBAT), poly(butylène succinate-coteréphtalate) PBST, poly(butylène succinate) (PBS), polyhydroxyalcanoates (PHA), polyhydroxybutyrate (PHB) polycaprolactone (PCL), acide polylactique (PLA) et/ou des mélanges de ceux-ci.

4. Composition à base d'amidon biodégradable selon une quelconque revendication entre 1 et 3, **caractérisée par le fait qu'**elle comprend en outre des adjuvants sélectionnés depuis un groupe consistant en : sorbitol, glycérine, huile de fève de soja raffinée d'alkali, dispersants, plastifiants et/ou lubrifiants.

5. Composition à base d'amidon biodégradable selon les revendications 1 à 4, **caractérisée par le fait que** le contenu du dérivé d'ester de colophane est de 10 % par poids par rapport à la composition totale.

6. Composition à base d'amidon biodégradable selon une quelconque revendication entre 1 et 5, **caractérisée par le fait que** le contenu du composant à base d'amidon est présent dans la composition dans une quantité comprise entre 30 et 50 % en masse, les copolymères ou polyesters sont présents dans une quantité comprise entre 40 et 60 % en masse,le dérivé de colophane est présent dans une quantité comprise entre 0,1 et 15 % en masse, les plastifiants et/ou dispersants sont présents dans une quantité jusqu'à 5 % en masse et d'autres additifs sont présents dans une quantité en dessous de 1% em masse, par rapport au poids total de la composition à base d'amidon biodégradable.

7. Feuille, film, récipients et articles moulés fabriqués à l'aide de la composition à base d'amidon biodégradable d'une quelconque revendication précédente.

8. Usage d'un dérivé ester de colophane ayant un point de ramollissement de 80 - 120 °C, un indice d'acidité en dessous de 30 mgKOH/g et d'un poids moléculaire de 800Da - 3000Da pour la fabrication d'un mélange ou d'une composition plastique à base d'amidon biodégradable avec un traitement amélioré et des propriétés thermales, microstructurales et mécaniques, où le dérivé ester d'amidon est sélectionné du groupe consistant en : ester pentaérythritol de colophane, ester glycérol de colophane, ester glycol d'éthylène de colophane et/ou des mélanges de ceux-ci dans des quantités comprises entre 0,1 et 15 % en masse par rapport à la composition totale.
